# EUROPÄISCHE PATENTSCHRIFT

(11) **EP 2 858 039 B1**
(45) Veröffentlichungstag und Bekanntmachung des Hinweises auf die Patenterteilung: **08.11.2017**
(21) Anmeldenummer: 14177842.3
(22) Anmeldetag: 21.07.2014
(51) Int. Cl.: G07C 5/08, G08G 1/097, G08G 1/017, G08G 1/14, G01C 21/32, G07B 15/06, G08G 1/056, G08G 1/0967, G01C 21/36

(54) **Verfahren zur automatischen Kontrolle des Einfahrens eines Straßenfahrzeuges in einen kontrollierten Straßenabschnitt, Kontrollsystem und fahrzeugseitiges System dafür sowie Computerprogramm**
Method for automatically control of the entry of a road vehicle into a controlled stretch of road, control system and on-board system for the same, and computer program
Procédé de contrôle automatique de l'arrivée d'un véhicule routier dans une section de route contrôlée, système de contrôle et son système côté véhicule et programme informatique

(30) Priorität: 25.07.2013 DE 102013107962; 25.07.2013 DE 102013107960; 25.07.2013 DE 102013107959; 26.07.2013 DE 102013108034
(43) Veröffentlichungstag der Anmeldung: 08.04.2015
(73) Patentinhaber: Deutsches Zentrum für Luft- und Raumfahrt e.V., 51147 Köln (DE)
(72) Erfinder: Frankiewicz, Tobias, 38442 Wolfsburg (DE); Schnieder, Lars, 38104 Braunschweig (DE)
(74) Vertreter: Günther, Constantin

(56) Entgegenhaltungen:
- WO-A1-02/075664
- WO-A1-2008/040391
- WO-A1-2010/034317
- WO-A2-02/101664
- DE-A1-102005 058 033
- DE-A1-102009 036 177

## Beschreibung

Die Erfindung betrifft ein Verfahren zur automatischen Kontrolle des Einfahrens eines Straßenfahrzeuges in einen durch ein Kontrollsystem kontrollierten Straßenabschnitt gemäß Anspruch 1. Die Erfindung betrifft ferner ein Kontrollsystem zur Kontrolle eines kontrollierten Straßenabschnitts gemäß Anspruch 9 sowie ein fahrzeugseitiges System gemäß Anspruch 11 und ein Computerprogramm gemäß den Ansprüchen 12 und 13.

Allgemein betrifft die Erfindung das Gebiet der automatischen Kontrolle des Einfahrens und damit auch des Befahrens von Straßenabschnitten durch Straßenfahrzeuge, wobei der Stra-ßenabschnitt durch ein Kontrollsystem automatisch kontrolliert wird. Mit einem solchen System kann z. B. überwacht werden, ob eine Einbahnstraße nur in der zugelassenen Fahrtrichtung genutzt wird, oder ob Gewichtsbeschränkungen an Brücken oder Fahrzeughöhen- und Breitenbeschränkungen eingehalten werden. Schließlich ist auch eine Anwendung eines solchen Systems zur Mautkontrolle und weitere später noch genannte Anwendungszwecke denkbar.

Bekannte Systeme zur Mautkontrolle, wie z. B. in DE 10 2011 088 142 A1 oder WO 02/101664 A2 beschrieben, eignen sich nicht für die zuvor erwähnten sicherheitsrelevanten Anwendungen, wie z. B. die Kontrolle von Einbahnstraßen oder gewichtsbeschränkten Straßenabschnitten.

Der Erfindung liegt daher die Aufgabe zu Grunde, ein Verfahren zur automatischen Kontrolle des Einfahrens eines Straßenfahrzeuges in einen durch ein Kontrollsystem kontrollierten Stra-ßenabschnitt anzugeben, das sich auch für sicherheitsrelevante Anwendungen eignet. Ferner soll ein hierfür geeignetes Kontrollsystem, ein fahrzeugseitiges System sowie Computerprogramme für solche Systeme angegeben werden.

Diese Aufgabe wird durch ein Verfahren zur automatischen Kontrolle des Einfahrens eines Straßenfahrzeuges in einen durch ein Kontrollsystem kontrollierten Straßenabschnitt gemäß Anspruch 1 gelöst.

Die Erfindung hat den Vorteil, dass das Kontrollsystem automatisch mit fahrzeugseitigen Systemen kooperiert und das Gesamtsystem dadurch sicherer ist als bei bekannten Vorschlägen, insbesondere gegenüber Manipulationen von Straßenfahrzeugnutzern. Durch die Nutzung von Einfahrtberechtigungstoken, die nur bei Zulässigkeit der Einfahrt des Straßenfahrzeuges in den kontrollierten Straßenabschnitt ausgegeben werden, kann sehr effizient sowohl den sicherheitskritischen Anforderungen Genüge getan werden als auch ein reibungsloser Ablauf des Straßenverkehrs ermöglicht werden.

Dadurch, dass das fahrzeugseitige System selbst (automatisch) ein Einfahrterlaubnissignal erzeugt, wenn der angeforderte Einfahrtberechtigungstoken empfangen wurde, und anderenfalls ein Einfahrverbotssignal, stehen im Straßenfahrzeug Signale zur Verfügung, die einer weiteren automatischen Auswertung im Straßenfahrzeug zugänglich sind. So kann z. B. das Straßenfahrzeug automatisch gebremst werden, wenn ein Einfahrtverbotssignal vorliegt. Vor einem automatischen Bremsvorgang kann noch die Ausgabe einer Warnmeldung vorgesehen sein.

Die Vergabe von Einfahrtberechtigungstoken, die z. B. in begrenzter Zahl verfügbar sein können, erlaubt zudem eine Kontrolle, wie viele und welche Straßenfahrzeuge sich im kontrollierten Straßenabschnitt befinden können. Durch die Begrenzung der Anzahl von Einfahrtberechtigungstoken kann ein Zulässigkeitserfordernis für die Ausgabe von Einfahrtberechtigungstoken aufgestellt werden. Sobald keine Einfahrtberechtigungstoken mehr vorhanden sind, weil bereits alle ausgegeben sind, würden weitere anfordernde Straßenfahrzeuge solange keinen Einfahrtberechtigungstoken erhalten können, wie ausgegebene Einfahrtberechtigungstoken nicht zurückgegeben sind.

Ein Einfahrtberechtigungstoken kann als binär kodiertes Datum oder Datensatz ausgebildet sein. Zur Sicherung gegen Manipulation ist es vorteilhaft, Einfahrtberechtigungstoken mit einem Sicherungsmechanismus, wie z. B. einer Prüfsumme oder einer Verschlüsselung (encryption) zu versehen. Der Empfänger eines Einfahrtberechtigungstokens kann dann dessen Authentizität überprüfen. Die Einfahrtberechtigungstoken werden wie körperliche Gegenstände in dem Kontrollsystem verwaltet. Ein an ein Straßenfahrzeug ausgegebener Einfahrtberechtigungstoken kann nicht ein zweites Mal vergeben werden, solange er nicht an das Kontrollsystem zurückgegeben wurde.

Gemäß der Erfindung ist daher vorgesehen, dass das anfordernde Straßenfahrzeug nach Verlassen des kontrollierten Straßenabschnitts den vom Kontrollsystem erhaltenen Einfahrtberechtigungstoken an das Kontrollsystem zurückgibt.

Gemäß einer vorteilhaften Weiterbildung der Erfindung prüft das Kontrollsystem anhand von einem, mehreren oder allen der nachfolgenden Kriterien, ob die Ausgabe eines Einfahrtberechtigungstokens an das anfordernde Straßenfahrzeug zulässig ist:
a) ob die aktuelle Verkehrssituation im kontrollierten Straßenabschnitt die Ausgabe des Einfahrtberechtigungstokens erlaubt,
b) ob bei einem begrenzten Vorrat an Einfahrtberechtigungstoken im Kontrollsystem nach Ausgabe des angeforderten Einfahrtberechtigungstokens noch eine Restmenge an Einfahrtberechtigungstoken vorhanden ist, die einen vorgegebenen Mindestwert erreicht,
c) ob für die im kontrollierten Straßenabschnitt gewünschte Fahrtrichtung des anfordernden Straßenfahrzeuges überhaupt ein Einfahrtberechtigungstoken ausgegeben werden kann,
d) ob die Anzahl der für den kontrollierten Straßenabschnitt bereits ausgegebenen Einfahrtberechtigungstoken einen vorgegebenen Maximalwert erreicht hat,
e) ob im Falle attributierter Einfahrtberechtigungstoken die Anzahl der für den kontrollierten Straßenabschnitt bereits ausgegebenen Einfahrtberechtigungstoken eines bestimmten Attributs oder einer bestimmten Attributekombination einen vorgegebenen Grenzwert erreicht haben.
Hieran können sich die Schritte c) bis e) des Anspruchs 1 anschließen.

Dies zeigt die universellen Einsatzmöglichkeiten der Erfindung. Je nach angewendeten Zulässigkeitskriterien kann das erfindungsgemäße Verfahren zur Kontrolle unterschiedlichster Arten von Straßenabschnitten verwendet werden, wie z. B. Einbahnstraßen, wechselseitig in jeweils einer Richtung befahrene Straßenabschnitte, z. B. an Baustellen oder bei engen Brücken, Straßenabschnitte mit Gewichts-, Höhen- und/oder Breitenbeschränkungen von Kraftfahrzeugen, Straßenabschnitte, die nur für bestimmte Straßenfahrzeuge zugelassen sind, wie z. B. öffentliche Verkehrsmittel. Die Erfindung kann zur Kontrolle eingesetzt werden, ob die Durchfahrt eines Rettungsfahrzeuges oder ähnlichen Sonderfahrzeuges in entgegen der vorgeschriebenen Fahrtrichtung einer Einbahnstraße verlaufender Richtung erlaubt werden kann, weil kein anderes Fahrzeug entgegenkommt. Die Erfindung kann an Bahnübergängen als System zur Gefahrenraumfreimeldung eingesetzt werden.

Sofern bei einem begrenzten Vorrat an Einfahrtberechtigungstoken die Restmenge an Einfahrtberechtigungstoken geprüft wird, kann hierdurch die maximale Anzahl von Straßenfahrzeugen im kontrollierten Straßenabschnitt begrenzt werden. Die maximale Anzahl an Token kann auch dynamisch der Verkehrssituation (z.B. zur Verbesserung des Verkehrsflusses in Spitzenzeiten / "Rush-Hour") oder der Tageszeit (z.B. zur Verkehrsberuhigung in den Abend-/Nachtstunden oder an Wochenenden und Feiertagen) angepasst sein oder werden.

Sofern geprüft wird, ob für die im kontrollierten Straßenabschnitt gewünschte Fahrtrichtung des anfordernden Straßenfahrzeuges überhaupt ein Einfahrtberechtigungstoken ausgegeben werden kann, so kann hiermit insbesondere eine Kontrolle des Durchfahrens von Einbahnstraßen entgegen der zulässigen Fahrtrichtung kontrolliert werden. So würde ein Einfahrtberechtigungstoken für die Durchfahrt einer Einbahnstraße entgegen der zulässigen Fahrtrichtung nur an Straßenfahrzeuge mit entsprechender Autorisierung, wie z. B. Rettungsfahrzeuge und andere Sonderfahrzeuge, ausgegeben werden, aber nicht an den allgemeinen Straßenverkehr.

Soweit kontrolliert wird, ob die Anzahl der für den kontrollierten Straßenabschnitt bereits ausgegebenen Einfahrtberechtigungstoken einen vorgegebenen Maximalwert erreicht hat, so kann hierdurch ebenfalls die Anzahl der Straßenfahrzeuge im kontrollierten Straßenabschnitt begrenzt werden und damit einem Stau oder einer erhöhten Unfallgefahr entgegengewirkt werden.

Es können auch attributierte Einfahrtberechtigungstoken verwendet werden. Die Einfahrtberechtigungstoken können z. B. ein Attribut hinsichtlich des zulässigen Gesamtgewichts des Fahrzeugs oder anderer Fahrzeugmerkmale enthalten. Im Falle attributierter Einfahrtberechtigungstoken können bestimmte Vorratsmengen an Einfahrtberechtigungstoken jeweils für Gruppen von unterschiedlich attributierten Einfahrtberechtigungstoken vorgehalten werden.

Gemäß einer vorteilhaften Weiterbildung der Erfindung weisen die Einfahrtberechtigungstoken eines oder mehrere Attribute auf, wobei die Attribute bestimmte Berechtigungen des anfordernden Straßenfahrzeuges zur Benutzung des kontrollierten Straßenabschnitts kennzeichnen, wie z. B. zulässiges Gesamtgewicht, zulässige maximale Achslast, Gesamtlänge des Fahrzeugs inkl. eventuell vorhandenen Anhängern, zulässige Fahrgeschwindigkeit, wenigstens eine Fahrzeugdimension, wie z. B. Höhe und/oder Breite, eine Fahrtrichtungsvorgabe beim Befahren des kontrollierten Straßenabschnitts, eine Prioritätsberechtigung beim Befahren des kontrollierten Straßenabschnitts. Letzteres ist insbesondere für Rettungsfahrzeuge und andere Sonderfahrzeuge von Bedeutung. Diese Prioritätsberechtigung muss ebenfalls gesichert werden, z.B. durch die bereits oben erwähnte Verschlüsselung. Durch die Berücksichtigung solcher Kriterien, die das anfordernde Straßenfahrzeug dem Kontrollsystem mitteilt, ist eine noch feinere und universellere Kontrolle von Straßenfahrzeugen in kontrollierten Straßenabschnitten möglich.

Gemäß einer vorteilhaften Weiterbildung der Erfindung weist ein Einfahrtberechtigungstoken als Attribut einen Gültigkeitszeitraum und/oder einen Ablaufzeitpunkt des Einfahrtberechtigungstokens auf. Wird der Gültigkeitszeitraum überschritten oder der Ablaufzeitpunkt erreicht, wird der Einfahrtberechtigungstoken automatisch ungültig, so dass ein den Einfahrtberechtigungstoken nutzendes Straßenfahrzeug seine hierdurch gegebene Berechtigung zur Nutzung des kontrollierten Straßenabschnitts verliert. Gemäß einer vorteilhaften Weiterbildung der Erfindung wird ein ungültig gewordener Einfahrtberechtigungstoken vom Straßenfahrzeug an das Kontrollsystem zurückgegeben.

Gemäß einer vorteilhaften Weiterbildung der Erfindung weist die Kontrolleinrichtung dem Einfahrtberechtigungstoken weitere Attribute zur Verkehrssteuerung zu. Diese können z.B. sein:
- minimaler Abstand zum vorausfahrenden Fahrzeug, z.B. um die Überlastung einer Brücke zu vermeiden, analog zum Mindestabstand zwischen LKW, der per Verkehrszeichen an Brücken angeordnet wird;
- zulässige Höchstgeschwindigkeit für ein spezifisches Fahrzeug, z.B. für einen LKW in Abhängigkeit von dessen zulässiger Gesamtmasse oder Achslast, um die Belastung einer Brücke einzugrenzen.

Gemäß einer vorteilhaften Weiterbildung der Erfindung weist eine Einfahrtberechtigungstoken-Anforderung eine oder mehrere Angaben über eine gewünschte Benutzungsart des kontrollierten Straßenabschnitts durch das anfordernde Straßenfahrzeug auf. Das Kontrollsystem prüft beim Empfang einer Einfahrtberechtigungstoken-Anforderung, ob die Ausgabe eines Einfahrtberechtigungstokens an das anfordernde Straßenfahrzeug für die gewünschte Benutzungsart zulässig ist und übermittelt nur bei Zulässigkeit den angeforderten Einfahrtberechtigungstoken an das anfordernde Straßenfahrzeug. Hieran können sich die Schritte d) und e) des Anspruchs 1 anschließen.

Gemäß einer vorteilhaften Weiterbildung der Erfindung übermittelt das Kontrollsystem bei Zulässigkeit einen attributierten Einfahrtberechtigungstoken an das anfordernde Straßenfahrzeug, der als Attribute die eine oder mehreren Angaben über die gewünschte Benutzungsart des kontrollierten Straßenabschnitts durch das anfordernde Straßenfahrzeug aufweist.

Gemäß einer vorteilhaften Weiterbildung der Erfindung wird von dem sich im kontrollierten Straßenabschnitt befindenden Straßenfahrzeug der Einfahrtberechtigungstoken an das Kontrollsystem zurückgegeben, wenn das Straßenfahrzeug im kontrollierten Straßenabschnitt außerhalb der von Straßenfahrzeugen für die Durchfahrt zu benutzenden Fahrfläche abgestellt wird, z. B. auf einem Parkplatz. Nach Rückgabe des Einfahrtberechtigungstokens ist das Straßenfahrzeug dann bei Wiederaufnahme der Fahrt zunächst nicht berechtigt, die Fahrt im kontrollierten Straßenabschnitt fortzusetzen. Das Straßenfahrzeug, das in dem kontrollierten Stra-ßenabschnitt außerhalb der von Straßenfahrzeugen für die Durchfahrt zu benutzenden Fahrfläche abgestellt wurde, fordert daher einen neuen Einfahrtberechtigungstoken vom Kontrollsystem an, wenn das Straßenfahrzeug die Durchfahrt durch den kontrollierten Straßenabschnitt fortsetzen soll. Hieran können sich die Schritte b) bis e) des Anspruchs 1 anschließen. Dies hat den Vorteil, dass sich das erfindungsgemäße Verfahren praxisgerecht auch dann einsetzen lässt, wenn die Durchfahrt durch den kontrollierten Straßenabschnitt nicht immer unterbrechungsfrei durchgeführt wird. Dies ist insbesondere für Einbahnstraßen im innerstädtischen Bereich von großer Bedeutung. Aber auch ungewollte Stopps, wie z. B. ein auf einer Autobahn liegengebliebenes Fahrzeug, das außerhalb der für die Durchfahrt zu benutzenden Fahrfläche abgestellt wurde (Seitenstreifen), können hiermit erfasst werden.

Verfahren der zuvor beschriebenen Art können vorteilhaft zur Maut-Kontrolle, zur Verkehrsflussbegrenzung bei Last- und/oder Fahrzeuggrößen-begrenzten Straßenabschnitten, zur Stauvermeidung, zur Geschwindigkeitskontrolle, zur Absicherung von Einbahnstraßen, zur Absicherung von Autobahnauffahrten, zur Absicherung von Bahnübergängen und/oder zur Ermöglichung von Prioritätsfahrrechten von Sondereinsatzfahrzeugen verwendet werden. In einer Anwendung zur Maut-Kontrolle kann eine Abrechnung der zu entrichtenden Maut enthalten sein, da beim Einfahren den kontrollierten Straßenabschnitt ein Einfahrtberechtigungstoken angefordert wird und beim Verlassen der Einfahrtberechtigungstoken zurück gegeben wird. Die Verweilzeit des Einfahrtberechtigungstokens in einem Straßenfahrzeug bzw. einem Straßenabschnitt oder die Strecke zwischen Ausgabestelle und Rückgabestelle des Einfahrtberechtigungstokens können zur Abrechnung der Maut eingesetzt werden. Bei einer Anwendung zur Geschwindigkeitskontrolle ist es ebenfalls sinnvoll, die Verweilzeit des Einfahrtberechtigungstokens zu bestimmen und in Relation zur Länge des kontrollierten Straßenabschnitts zusetzen.

Die Verweilzeiten des Einfahrtberechtigungstokens in einem Straßenfahrzeug bzw. einem Straßenabschnitt stellen darüber hinaus auch wertvolle Informationen für die Verkehrslenkung dar (Floating Object Data).

Die Erfindung kann auch dahingehend erweitert werden, dass neben der Verweilzeit eines Einfahrtberechtigungstokens noch weitere Parameter für die Verkehrslenkung ausgewertet werden:
- Tokenausgabefrequenz
- Tokenanfragefrequenz

Das Verhältnis der beiden zuvor angegebenen Größen kann ein Indiz für Kapazitätsengpässe der Straßenverkehrsinfrastruktur sein.

Die eingangs genannte Aufgabe wird ferner gemäß Anspruch 9 gelöst durch ein Kontrollsystem zur Kontrolle eines kontrollierten Straßenabschnitts und zur Ausgabe und Wiederannahme von Einfahrtberechtigungstoken an anfordernde Straßenfahrzeuge oder von Straßenfahrzeugen, wobei das Kontrollsystem zur Ausführung der Kontrollsystem-seitigen Schritte eines Verfahrens der zuvor beschriebenen Art eingerichtet ist.

Gemäß einer vorteilhaften Weiterbildung der Erfindung ist das Kontrollsystem insgesamt oder teilweise als stationäres, infrastrukturseitiges Kontrollsystem und/oder wenigstens ein Teil des Kontrollsystems als Teil eines fahrzeugseitigen Systems eines Straßenfahrzeuges ausgebildet. Es ist grundsätzlich möglich, das Kontrollsystem vollständig in fahrzeugseitigen Systemen zu realisieren, derart, dass sich zwei Straßenfahrzeuge durch Verwaltung und Ausgabe von Einfahrtberechtigungstoken jeweils gegenseitig kontrollieren, z. B. bei der Einfahrt in eine Einbahnstraße. Insbesondere ist auch eine Ad-hoc-Kommunikation zwischen Straßenfahrzeugen möglich. In vielen Fällen ist es vorteilhaft, das Kontrollsystem insgesamt oder teilweise als stationäres, infrastrukturseitiges Kontrollsystem auszubilden. In diesem Fall ist immer eine feste Instanz vorhanden, die einem bestimmten kontrollierten Straßenabschnitt zugeordnet ist. Das Kontrollsystem kann örtlich auf oder nahe dem kontrollierten Straßenabschnitt angeordnet sein. Es ist auch möglich, das Kontrollsystem an entfernter Stelle anzuordnen. Das Kontrollsystem kann auch ein zentrales Verkehrskontrollsystem sein.

Die eingangs genannte Aufgabe wird gemäß Anspruch 11 ferner gelöst durch ein fahrzeugseitiges System zum Anfordern und Zurückgeben von Einfahrtberechtigungstoken von einem oder an ein Kontrollsystem, wobei das fahrzeugseitige System zur Ausführung der fahrzeugseitigen Schritte eines Verfahrens der zuvor beschriebenen Art eingerichtet ist.

Die eingangs genannte Aufgabe wird gemäß Anspruch 12 ferner gelöst durch ein Computerprogramm mit Programmcodemitteln eingerichtet zur Durchführung der Kontrollsystem-seitigen Schritte eines Verfahrens der zuvor beschriebenen Art, wenn das Computerprogramm auf einem Prozessor eines Kontrollsystems ausgeführt wird.

Die eingangs genannte Aufgabe wird gemäß Anspruch 13 ferner gelöst durch ein Computerprogramm mit Programmcodemitteln eingerichtet zur Durchführung der fahrzeugseitigen Schritte eines Verfahrens der zuvor beschriebenen Art, wenn das Computerprogramm auf einem Prozessor eines fahrzeugseitigen Systems ausgeführt wird.

Die für die Durchführung des erfindungsgemäßen Verfahrens notwendigen Kommunikationsschritte zwischen dem fahrzeugseitigen System und dem Kontrollsystem können durch unterschiedliche technische Ausstattungen realisiert werden. Vorteilhaft ist insbesondere eine drahtlose Kommunikation, z. B. eine Funkkommunikation oder eine Kommunikation mittels optischer Datenübertragung. Grundsätzlich kann jede geeignete Schnittstelle genutzt werden. Wirtschaftlich günstig ist es, wenn ein in einem Straßenfahrzeug ohnehin vorhandenes Übertragungssystem genutzt wird, wie z. B. ein Mobiltelefon (Mobilfunknetz) oder eine in dem Straßenfahrzeug vorhandene Kommunikationseinheit eines Systems, das Teil einer Car-to-X-Infrastruktur ist. Dies hat den Vorteil, dass keine zusätzlichen Investitionen seitens der Betreiber von Fahrzeugen erforderlich sind, um die Vorteile der Erfindung zu nutzen. Hierdurch kann auch das wirtschaftliche Potential der Car-to-X-Infrastruktur zusätzlich zur Optimierung des Verkehrsflusses des Straßenverkehrs genutzt werden, insbesondere im Hinblick auf kontrollierte Straßenabschnitte.

In dieser Hinsicht betrifft die Erfindung auch das Gebiet der automatischen Fahrzeugkommunikation, insbesondere von Fahrzeugen des Straßenverkehrs. Fahrzeuge, die mit einer entsprechenden Fahrzeugkommunikationseinheit ausgestattet sind, sind in der Lage, über die Fahrzeugkommunikationseinheit mit anderen Fahrzeugen mit entsprechender Ausstattung eine automatische Datenkommunikation durchzuführen, und ferner eine automatische Datenkommunikation mit Infrastruktureinrichtungen und/oder anderen Verkehrsteilnehmern durchzuführen, wie zum Beispiel mit Lichtsignalanlagen, Verkehrszeichen, anderen fest installierten Einrichtungen, Fußgängern und Radfahrern. Entsprechende, derzeit in der Entwicklung befindliche Systeme werden auch als Car-to-Car-Systeme, Car-to-Infrastructure-Systeme oder Car-to-X-Systeme bezeichnet, wobei das "X" als Platzhalter für beliebige Infrastruktureinrichtungen, andere Fahrzeuge und andere Verkehrsteilnehmer steht. Weitere übliche Bezeichnungen sind Car2C-, Car2X-, C2C- bzw. C2X-Systeme, Vehicle-to-Vehicle-Systeme, Vehicle-to-Infrastructure-Systeme, Vehicle-to-X-Systeme oder weiter abgekürzt V2V-Systeme, V2I-Systeme, V2X-Systeme.

Infrastruktureinrichtungen sind insbesondere stationäre Einrichtungen, die z.B. Teil der Verkehrsinfrastuktur sind, wie z.B. Lichtsignalanlagen. Insofern bezeichnet der Begriff "infrastrukturseitig" insbesondere stationäre Einrichtungen.

Vorteilhaft kann z. B. eine Car-to-X-Infrastruktureinrichtung mit einem straßenseitigen Kontrollsystem gekoppelt sein und im Bereich des kontrollierten Straßenabschnitts aufgestellt werden. Gemäß einem weiteren Aspekt der Erfindung weist daher z. B. eine Einbahnstraße eine Car-to-X-Infrastruktureinrichtung mit einem Kontrollsystem oder zumindest Kommunikationseinheit zur Durchführung einer Datenkommunikation mit einem Kontrollsystem und fahrzeugseitigen Systemen auf.

Zusammengefasst ergeben sich folgende weitere Vorteile der Erfindung:
- Es wird der bislang nicht abgedeckte Fall des Gegenfahrschutzes in Einbahnstraßen für ÖPNV und Sondereinsatzfahrzeuge technisch gesichert (Schutzfunktion).
- Deadlocks (betriebshemmende Verklemmungen des Verkehrsablaufs) werden wirksam unterbunden.
- Es können durch die kommunikative Vernetzung mit einer Standardtechnologie auch parkende Fahrzeuge mit berücksichtigt werden.
- Entfall von Beschilderung (Verkehrszeichen).
- Entfall einer Umbeschilderung bei Fahrtrichtungswechsel.
- Aktualität der Datenbasis im Straßenfahrzeug ist gewährleistet durch ständige Information / Aktualisierung vom Accesspoint bzw. von einer Road Side Unit, im Gegensatz zu potentiell veralteter Datenbasis im Navigationssystem.
- Freie Sichtachse ist nicht mehr erforderlich durch Fahren auf "elektronische Sicht".
- Möglichkeit der dynamischen und bedarfsorientierten Umkehr der zulässigen Fahrtrichtung.
- Vergabe fahrtrichtungsabhängiger Einfahrtberechtigungstoken erhöht die Sicherheit.
- Vergabe fahrtrichtungsabhängiger Einfahrtberechtigungstoken erhöht die Kapazität durch Ausschluss von Deadlocks.
- Konsequente Integration aller Verkehrsteilnehmer, auch parkender Fahrzeuge.
- Wirksame Unterbindung unzulässiger Einfahrten in beide Richtungen durch Integration in intervenierende Fahrerassistenzsysteme.
- Durch Integration in Fahrzeugsysteme können Fahrern alternative Routen angeboten werden (Komfortsteigerung).
- Entzug von Einfahrtberechtigungstoken mit gleichzeitiger Wirkung.
- Zeitliche Attributierung von Einfahrtberechtigungstoken mit Warnung bei Ablauf.
- Möglichkeit der Umkonfiguration der Accesspoints bzw. der Road Side Unit, z.B. für einen Wechsel der Fahrtrichtung.
- Konsequente Nutzung von stets aktuellen Anzeigemöglichkeiten im Fahrzeug.
- Statistische Auswertung der Tokennutzung und Anwendung dieser Daten für die Verkehrslenkung, u.a. Verweilzeiten zur Ableitung von Reisezeitinformationen.

Die Erfindung wird nachfolgend anhand von Ausführungsbeispielen unter Verwendung von Zeichnungen näher erläutert.

Es zeigen
- Figuren 1 bis 4: - verschiedene Szenarien des Durchfahrens einer Einbahnstraße und
- Figur 5: - das Befahren einer zweispurigen Straße.

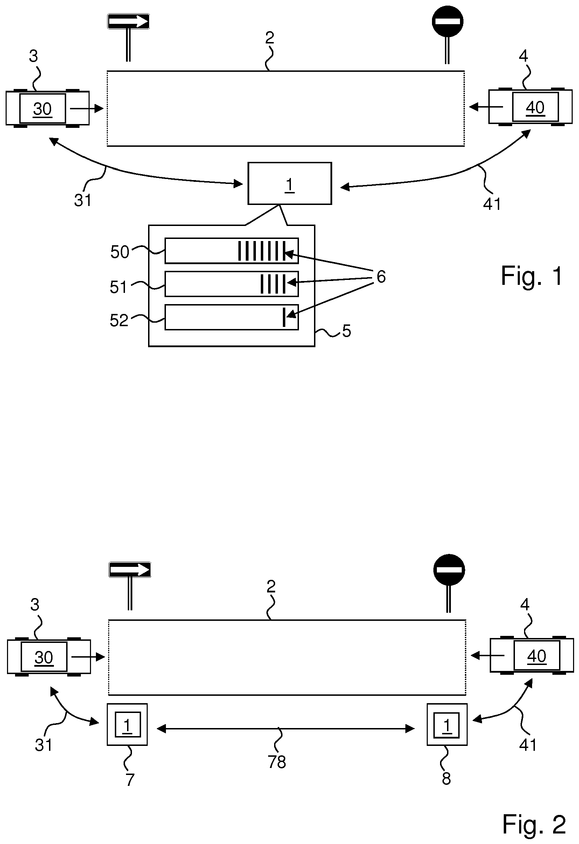

Sämtliche im Folgenden verwendeten Bezugszeichen beziehen sich auf die Figuren 1 bis 5. In diesen Figuren werden gleiche Bezugszeichen für einander entsprechende Elemente verwendet. Die Figuren zeigen jeweils einen Straßenabschnitt sowie darauf befindliche Fahrzeuge aus der Vogelperspektive.

Die Figuren 1 bis 4 zeigen jeweils als kontrollierten Straßenabschnitt 2 eine Einbahnstraße, deren zulässige Fahrtrichtung von links nach rechts verläuft. Ein Straßenfahrzeug 3 befindet sich vor der Einfahrt in den Straßenabschnitt 2 in zulässiger Fahrtrichtung, ein Straßenfahrzeug 4 befindet sich vor dem Straßenabschnitt 2 in nicht zulässiger Fahrtrichtung der Einbahnstrasse. Die Straßenfahrzeuge 3, 4 weisen jeweils ein fahrzeugseitiges System 30, 40 auf, das zur automatischen Datenkommunikation mit anderen Fahrzeugen und/oder Infrastruktureinrichtungen eingerichtet ist. An dem Straßenabschnitt 2 befindet sich ferner als Teil einer Car-to-X-Infrastruktureinrichtung ein Kontrollsystem 1, das zur automatischen Kontrolle des Straßenabschnitts 2 dient. Das Kontrollsystem 1 kann mit den fahrzeugseitigen Systemen 30, 40 kommunizieren, d. h. einen automatischen Datenaustausch durchführen, wie durch die Pfeile 31, 41 symbolisiert wird. Das Kontrollsystem 1 hält in einem Speicher 5 eine Menge an Einfahrtberechtigungstoken 6 vor. Die Einfahrtberechtigungstoken 6 können zu unterschiedlichen Gruppen 50, 51, 52 zusammengefasst und gruppiert sein, z. B. unterschieden nach bestimmten zugelassenen Benutzungsarten des Straßenabschnitts 2 oder nach bestimmten Attributen der Einfahrtberechtigungstoken 6. Erkennbar ist, dass von der Gruppe 50 ein Vorrat an sieben Einfahrtberechtigungstoken vorhanden ist, von der Gruppe 51 ein Vorrat von vier Einfahrtberechtigungstoken und von der Gruppe 52 nur ein Einfahrtberechtigungstoken.

Es sei zunächst angenommen, dass nur das Straßenfahrzeug 3 in der dargestellten, zulässigen Fahrtrichtung den Straßenabschnitt 2 befahren möchte. Das Straßenfahrzeug 3 fordert dann über sein fahrzeugseitiges System 30 einen diesbezüglichen Einfahrtberechtigungstoken vom Kontrollsystem 1 an. Das Kontrollsystem 1 prüft, ob nicht gerade ein Straßenfahrzeug in entgegengesetzter, normalerweise nicht zulässiger Fahrtrichtung den Straßenabschnitt 2 passiert. Dies könnte z. B. bei einem Sondereinsatzfahrzeug der Fall sein. Wenn dies nicht der Fall ist, übermittelt das Kontrollsystem 1 den gewünschten Einfahrtberechtigungstoken 6 an das fahrzeugseitige System 30. Das fahrzeugseitige System 30 signalisiert dem Fahrer des Straßenfahrzeuges 3, dass dieser den Straßenabschnitt 2 wie gewünscht befahren darf. Hat das Straßenfahrzeug 3 den Straßenabschnitt 2 passiert, gibt es über sein fahrzeugseitiges System 30 den Einfahrtberechtigungstoken 6 an das Kontrollsystem 1 zurück.

Nun wird der Fall betrachtet, dass zu dem Zeitpunkt, an dem das fahrzeugseitige System 30 einen Einfahrtberechtigungstoken anfordert, das Straßenfahrzeug 4, das in diesem Fall ein sich im Rettungseinsatz befindliches Sondereinsatzfahrzeug sein soll, bereits über sein fahrzeugseitiges System 40 einen Einfahrtberechtigungstoken in entgegengesetzter Fahrtrichtung angefordert hat. Das Kontrollsystem 1 übermittelt dann an das fahrzeugseitige System 40 den gewünschten Einfahrtberechtigungstoken, auf Grund der Bevorrechtigung des Straßenfahrzeuges 4. Das Kontrollsystem 1 übermittelt zunächst keinen Einfahrtberechtigungstoken an das fahrzeugseitige System 30. Das fahrzeugseitige System 30 erkennt dies und signalisiert dem Fahrer des Straßenfahrzeuges 3, dass dieser den Straßenabschnitt 2 nicht wie gewünscht befahren darf. Sofern der Fahrer hierauf innerhalb einer angemessenen Zeit nicht reagiert, kann das fahrzeugseitige System 30 auch automatische Maßnahmen ergreifen, um eine Einfahrt des Straßenfahrzeuges 3 in den Straßenabschnitt 2 zu verhindern, wie z.B. eine Geschwindigkeitsreduzierung und/oder eine sanfte Abbremsung. Wenn das Straßenfahrzeug 40 den Straßenabschnitt 2 passiert hat, gibt es seinen Einfahrtberechtigungstoken an das Kontrollsystem 1 zurück. Erst dann übermittelt das Kontrollsystem 1 einen Einfahrtberechtigungstoken an das fahrzeugseitige System 30. Nun hat das Straßenfahrzeug 3 die Erlaubnis, den Straßenabschnitt 2 wie gewünscht zu passieren.

Schließlich sei angenommen, dass wieder die zuvor erläuterte Situation vorliegt, mit dem Unterschied, dass das Straßenfahrzeug 4 keine Sonderrechte besitzt, d. h. kein Sondereinsatzfahrzeug ist. In diesem Fall erkennt das Kontrollsystem 1, dass das Straßenfahrzeug 4 niemals in unzulässiger Fahrtrichtung den Straßenabschnitt 2 passieren darf. Das Kontrollsystem 1 wird daher keinen Einfahrtberechtigungstoken in der vom Straßenfahrzeug 4 gewünschten falschen Fahrtrichtung vergeben.

In gleicher Weise lassen sich z. B. auch Autobahnauffahrten gegenüber Falschfahrern absichern.

Im Beispiel gemäß Figur 1 erfolgt eine Datenkommunikation der Straßenfahrzeuge 3, 4 jeweils mit dem Kontrollsystem 1. Zusätzlich kann auch noch eine automatische Datenkommunikation zwischen den Straßenfahrzeugen 3, 4 direkt erfolgen.

Das Beispiel gemäß Figur 2 zeigt eine Ausführungsform, die bis auf die nachfolgend genannten Unterschiede der Ausführungsform der Figur 1 entspricht. Statt eines zentralen Kontrollsystems 1 weist der Straßenabschnitt gemäß Figur 2 zwei getrennte Car-to-X-Infrastruktureinrichtungen 7, 8 auf, die jeweils einen Teil des Kontrollsystems 1 beinhalten. Die Infrastruktureinrichtungen 7, 8 können z. B. jeweils am Anfang und am Ende des kontrollierten Straßenabschnitts 2 angeordnet werden. Dies ist insbesondere bei relativ langen kontrollierten Straßenabschnitten wegen der begrenzten Funkreichweite von Car-to-X-Systemen sinnvoll. Die Infrastruktureinrichtungen 7, 8 bilden damit zugleich Accesspoints für die Datenkommunikation mit den Straßenfahrzeugen 3, 4. So kann das Straßenfahrzeug 3 mit der nächst gelegenen Infrastruktureinrichtung 7 kommunizieren, das Straßenfahrzeug 4 mit der ihm nächst gelegenen Infrastruktureinrichtung 8. Das System ist auch mit mehr als zwei Infrastruktureinrichtungen denkbar, die jedoch miteinander verbunden sein müssen. Die Verbindung kann über Kabel oder über eine Funkverbindung über eine geeignete Technologie, z.B. Car-to-X, erfolgen.

Die Infrastruktureinrichtungen 7, 8 bzw. deren integrierte Anteile des Kontrollsystems 1 kooperieren miteinander und tauschen automatisch Daten über Nachrichten 78 aus. Hierdurch wird eine gemeinsame Verwaltung der verfügbaren Einfahrtberechtigungstoken realisiert. Die Einfahrtberechtigungstoken 6 können daher z. B. teilweise in der Infrastruktureinrichtung 7 und teilweise in der Infrastruktureinrichtung 8 vorgehalten werden. Sofern eine der Infrastruktureinrichtungen 7, 8 keinen ausreichenden Vorrat mehr an Einfahrtberechtigungstoken hat, kann sie z. B. Nachschub von der anderen Infrastruktureinrichtung 7, 8 anfordern. Ein solcher Nachschub wird allerdings nur gewährt, wenn noch ausreichend Einfahrtberechtigungstoken vorhanden sind.

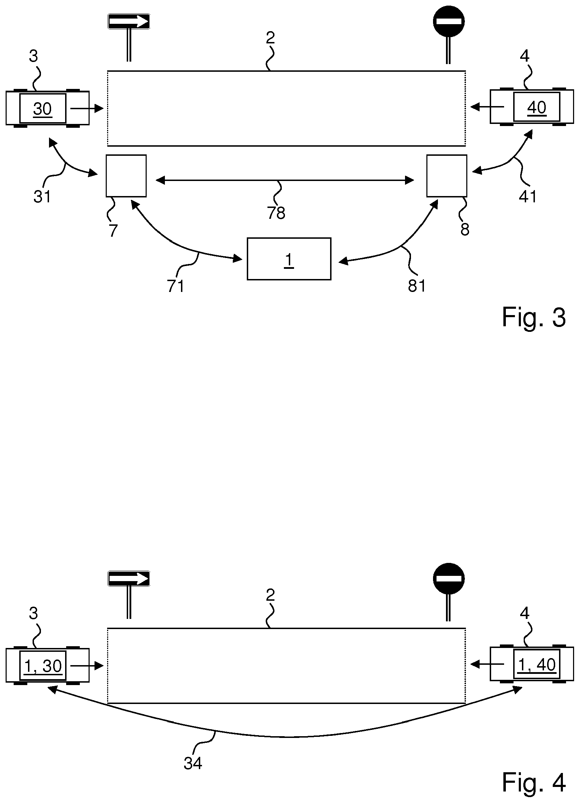

Die Figur 3 zeigt eine alternative Ausführungsform, die bis auf die nachfolgend genannten Unterschiede der Ausführungsform der Figur 2 entspricht. Gemäß Figur 3 dienen die Infrastruktureinrichtungen 7, 8 lediglich als Accesspoints, z. B. wegen der begrenzten Funkreichweite. Das Kontrollsystem 1 ist als gesonderte Einheit vorgesehen, die mit den Straßenfahrzeugen 3, 4 über Nachrichten 71, 81 mittelbar über die Infrastruktureinrichtungen 7, 8 kommuniziert.

Die Figur 4 zeigt eine alternative Ausführungsform, die der Ausführungsform gemäß Figur 1 entspricht, mit dem Unterschied, dass das Kontrollsystem 1 nicht infrastrukturseitig realisiert ist. Stattdessen ist das Kontrollsystem 1 bzw. jeweilige Anteile des Kontrollsystems 1 in den Straßenfahrzeugen 3, 4 integriert, z. B. zusammen mit deren jeweiligem fahrzeugseitigen System 30, 40. Zu beachten ist, dass das fahrzeugseitige System 30, 40 mit dem Teil des Kontrollsystems 1, das im selben Straßenfahrzeug angeordnet ist, nicht direkt innerhalb des Straßenfahrzeuges kommuniziert. Zwischen diesen Systemteilen besteht aus Sicherheitsgründen eine strikte Trennung, um zu vermeiden, dass ein Straßenfahrzeug sich sozusagen intern selbst einen Einfahrtberechtigungstoken zuweisen kann. Vielmehr ist eine gegenseitige Kommunikation 34 zwischen den Straßenfahrzeugen 3, 4 bzw. deren fahrzeugseitigen Systemen 30, 40 und dem jeweils im anderen Straßenfahrzeug vorgesehenen Anteil des Kontrollsystems 1 erforderlich.

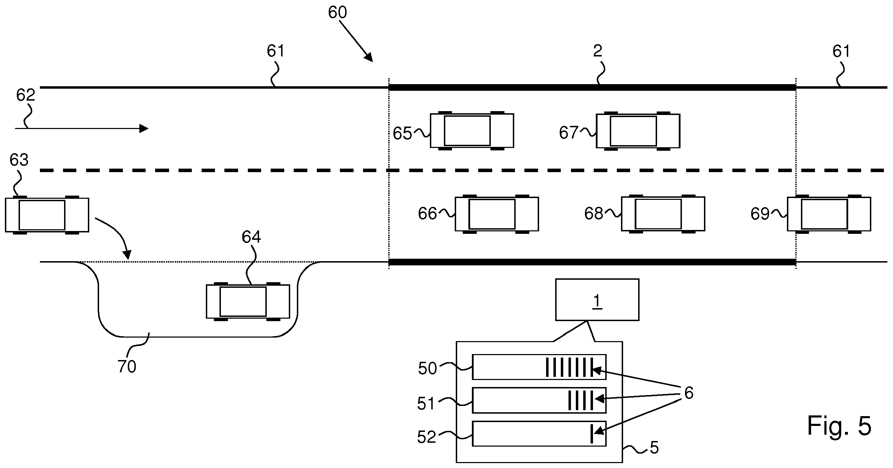

Die Figur 5 zeigt ausschnittsweise eine zweispurige Straße 60, die z. B. eine Fahrbahn einer Autobahn sein kann. Der dargestellte Straßenbereich 60 weist unkontrollierte Abschnitte 61 sowie zwischen den unkontrollierten Abschnitten 61 einen von dem Kontrollsystem 1 kontrollierten Straßenabschnitt 2 auf. Im Ausführungsbeispiel gemäß Figur 5 kann der kontrollierte Straßenabschnitt 2 z. B. eine Brücke mit begrenzter Traglast sein.

Die Figur 5 zeigt auf dem Straßenbereich 60 insgesamt sieben Straßenfahrzeuge 63, 64, 65, 66, 67, 68, 69, die sich in einer Fahrtrichtung 62 bewegen oder, wie im Fall des Straßenfahrzeugs 64, stehen. Das Kontrollsystem 1 führt eine automatische Datenkommunikation mit sämtlichen im Reichweitenbereich des Kontrollsystems befindlichen Straßenfahrzeugen aus. Straßenfahrzeuge, die den kontrollierten Straßenabschnitt 2 befahren wollen, müssen zunächst vom Kontrollsystem 1 über deren fahrzeugseitiges System einen Einfahrtberechtigungstoken anfordern. Das Kontrollsystem 1 verwaltet Einfahrtberechtigungstoken 6 in einem Speicher 5, wie zuvor bereits erläutert. Es können in verschiedenen Gruppen 50, 51, 52 von Einfahrtberechtigungstoken für unterschiedliche Fahrzeugklassen oder Gewichtsklassen von Straßenfahrzeugen vorhanden sein, z. B. Personenkraftwagen, Motorräder und Lastkraftwagen. Ankommende Straßenfahrzeuge 63, 64 fordern einen Einfahrtberechtigungstoken vom Kontrollsystem 1 gemäß Ihres Fahrzeugtyps bzw. ihres zulässigen Gesamtgewichts bzw. der zulässigen Achslast an. Diese Daten werden zusammen mit der Anforderung an das Kontrollsystem 1 übertragen. Das Kontrollsystem prüft, ob ein entsprechender Einfahrtberechtigungstoken noch in der entsprechenden Gruppe 50, 51, 52 verfügbar ist. Sofern noch ein Einfahrtberechtigungstoken verfügbar ist, überträgt das Kontrollsystem 1 diesen Einfahrtberechtigungstoken an das anfordernde Straßenfahrzeug. Anderenfalls wird zunächst kein Einfahrtberechtigungstoken übertragen.

Im dargestellten Beispiel wird angenommen, dass der kontrollierte Straßenabschnitt 2 bereits an seiner oberen gewichtsmäßigen Belastungsgrenze ist, z.B. im Fall einer Brücke. Einem ankommenden Straßenfahrzeug 63 wird daher vom Kontrollsystem 1 zunächst kein Einfahrtberechtigungstoken übermittelt. Dies wird dem Fahrer im Straßenfahrzeug 63 durch sein fahrzeugseitiges System signalisiert. Der Fahrer fährt daher sein Straßenfahrzeug 63 zunächst auf eine Haltebucht 70. Ein bereits auf der Haltebucht 70 befindliches, stehendes Straßenfahrzeug 64 hatte bereits zuvor einen Einfahrtberechtigungstoken vom Kontrollsystem 1 angefordert. Sobald von den Straßenabschnitt 2 verlassenden Straßenfahrzeugen, wie das Straßenfahrzeug 69, wieder ein Einfahrtberechtigungstoken zurückgegeben wird, der hinsichtlich seiner Attribute zur Anforderung des Straßenfahrzeuges 64 passt, kann das Kontrollsystem 1 diesen dann dem Straßenfahrzeug 64 übermitteln. Das Straßenfahrzeug 64 hat dann die Erlaubnis, den kontrollierten Straßenabschnitt 2 zu befahren.

Nachfolgend werden noch weitere Alternativen und Nutzungsmöglichkeiten der Erfindung kurz erläutert.

### Einfahrt in Regelrichtung:

Die Infrastruktureinrichtung vergibt im Regelbetrieb mehrere Durchfahrtsrechte, realisiert durch digitale "Einfahrtberechtigungstoken" für die zugelassene Fahrtrichtung. Fährt ein Straßenfahrzeug in die Einbahnstraße ein - entweder am Ende oder in einer Einmündung im weiteren Verlauf der Einbahnstraße-, fordert es von dem Kontrollsystem einen Einfahrtberechtigungstoken an. Das Kontrollsystem prüft die Zulässigkeit der Fahrtanfrage und vergibt einen Einfahrtberechtigungstoken an den Verkehrsteilnehmer. Liegt ein Konflikt vor, z.B. Einbahnstraße wird in Gegenrichtung beansprucht, wird die Fahrtanfrage zurückgewiesen. Der Fahrer erhält eine Information und ggf. eine alternative Fahrtempfehlung.

### Beschränkungen der Einfahrt in Regelrichtung:

Liegt eine Störung eines Straßenfahrzeugs, was bspw. durch die aktualisierten Positions- und Statusmeldungen von Straßenfahrzeugen an die Infrastruktur erkannt werden kann, oder eine Straßensperrung durch Polizei oder Ordnungsbehörde, oder ein laufender Feuerwehr- oder Rettungsdiensteinsatz oder dauerhafte Be- und Entladevorgänge vor, kann das Kontrollsystem die Ausgabe weiterer Einfahrtberechtigungstoken unterbinden. Auf diese Weise wird ein Rückstau verhindert, ggf. ein Deadlock vermieden und unnötige Rangiervorgänge zur Auflösung der Verklemmung können minimiert werden.

### Einparken in Einbahnstraße:

Parkt ein Straßenfahrzeug in der Einbahnstraße ein, gibt es seinen Einfahrtberechtigungstoken an das Kontrollsystem zurück. Der Einfahrtberechtigungstoken steht nun wieder für andere Fahrten zur Verfügung.

### Ausparken in Einbahnstraße:

Verlässt ein Straßenfahrzeug die Parklücke, fordert es bei der Infrastruktureinrichtung einen Einfahrtberechtigungstoken an. Nur wenn der Einfahrtberechtigungstoken vorliegt, kann es seine Fahrt in der Einbahnstraße fortsetzen.

### Ausfahrt aus Einbahnstraße:

Verlässt das Straßenfahrzeug die Einbahnstraße an ihrem Ende, wird der Einfahrtberechtigungstoken an die Infrastruktureinrichtung wieder zurückgegeben. Gleiches gilt beim Ausfahren aus der Einbahnstraße an einer Einmündung (in der Mitte der Einbahnstraße).

### Änderung der zulässigen Fahrtrichtung:

Durch Verkehrslenkungsmaßnahmen kann die zulässige Fahrtrichtung der Einbahnstraße umgekehrt werden. Nach dem gleichen Prinzip folgend kann auch eine Straße mit zwei Fahrstreifen für entgegengesetzte Fahrtrichtungen in eine Einbahnstraße mit zwei Fahrstreifen in einer Richtung überführt werden (bspw. für An- und Abfahrten bei Großveranstaltungen).

### Strassenfahrzeuge mit Sonderrechten, z. B. Sondereinsatzfahrzeuge, ÖPNV-Fahrzeuge:

### Einfahrt in Gegenrichtung:

Ein berechtigtes Straßenfahrzeug fragt die Einfahrterlaubnis in Gegenrichtung an. Die Fahrtanfrage wird an das Kontrollsystem versendet. Dort wird geprüft, ob Einfahrtberechtigungstoken für die Fahrt in Gegenrichtung vergeben sind. Sind Einfahrtberechtigungstoken für die Gegenrichtung im Umlauf werden die entsprechenden Verkehrsteilnehmer gewarnt und die Einfahrtberechtigungstoken zurück gefordert. Sie können entweder die Einbahnstraße noch verlassen oder einparken und geben entsprechend ihre Einfahrtberechtigungstoken zurück. Um einen ausreichend zeitlichen Vorlauf hierfür zu haben, kann ggf. das Straßenfahrzeug sich schon über benachbarte Accesspoints über ein Multihop-Kommunikationsverfahren, alternativ über Mobilfunk oder sonstige Datenverbindungen, von dem Kontrollsystem die Erlaubnis holen. Die Zulässigkeit der Fahrtanforderung kann auch technisch überprüft werden (Überprüfung des Kriteriums "Sondersignalanlage an").

### Fahrt in Einbahnstraße:

Während des Aufenthalts in der Einbahnstraße (Regelfahrt des ÖPNV, bzw. Einsatzgeschehen des Sondereinsatzfahrzeugs) wird die Einfahrt in die Einbahnstraße in beide Richtungen verhindert, indem keine weiteren Einfahrtberechtigungstoken verteilt werden.

### Ausfahrt aus Einbahnstraße:

Mit der Ausfahrt aus der Einbahnstraße, egal welche Richtung, geben die Straßenfahrzeuge ihren Einfahrtberechtigungstoken zurück. Die Anlage geht in den Regelbetrieb über.

### Baustellenampeln / Blockabfertigung an Tunneln:

Die Vorgehensweise für die Baustellenampeln oder an Tunneln ist analog zur oben dargestellten Verfahrensweise bei Einbahnstraßen. Zusätzlich kann für den Einfahrtberechtigungstoken ein Zeitstempel und eine Gültigkeitsdauer eingeführt werden. Ist die Gültigkeit "abgelaufen", wird das Straßenfahrzeug gewarnt und nach Ablauf einer Sicherheitsfrist kann die Fahrt in Gegenrichtung freigegeben werden. Die ersten Straßenfahrzeuge werden zusätzlich gewarnt.

## Patentansprüche

1. Verfahren zur automatischen Kontrolle des Einfahrens eines Straßenfahrzeuges (3, 4, 63 - 69) in einen durch ein Kontrollsystem (1) kontrollierten Straßenabschnitt (2) mit den Schritten:
a) von einem fahrzeugseitigen System (30, 40) des Straßenfahrzeuges (3, 4, 63 - 69) wird vor Einfahrt in den kontrollierten Straßenabschnitt (2) ein Einfahrtberechtigungstoken (6) vom Kontrollsystem (1) angefordert,
b) das Kontrollsystem (1) prüft bei Empfang einer Einfahrtberechtigungstoken-Anforderung, ob die Ausgabe eines Einfahrtberechtigungstokens (6) an das anfordernde Straßenfahrzeug (3, 4, 63 - 69) zulässig ist,
c) bei Zulässigkeit übermittelt das Kontrollsystem (1) den angeforderten Einfahrtberechtigungstoken (6) an das anfordernde Straßenfahrzeug (3, 4, 63 - 69),
**gekennzeichnet durch** folgende Merkmale:
d) das fahrzeugseitige System (30, 40) erzeugt spätestens bei der Einfahrt in den kontrollierten Straßenabschnitt (2) ein Einfahrterlaubnissignal, wenn der angeforderte Einfahrtberechtigungstoken (6) empfangen wurde, und ein Einfahrtverbotssignal, wenn der Einfahrtberechtigungstoken (6) nicht empfangen wurde,
e) das erzeugte Einfahrterlaubnissignal oder Einfahrtverbotssignal wird im Straßenfahrzeug (3, 4, 63 - 69) zur Erzeugung einer Warnmeldung und/oder zur Durchführung automatischer Steuer- und/oder Regelmaßnahmen weiterverwertet,
wobei das anfordernde Straßenfahrzeug (3, 4, 63 - 69) nach Verlassen des kontrollierten Straßenabschnitts (2) den vom Kontrollsystem (1) erhaltenen Einfahrtberechtigungstoken (6) an das Kontrollsystem (1) zurückgibt

2. Verfahren nach dem vorhergehenden Anspruch, **dadurch gekennzeichnet, dass** das Kontrollsystem (1) anhand von einem, mehreren oder allen der nachfolgenden Kriterien prüft, ob die Ausgabe eines Einfahrtberechtigungstokens (6) an das anfordernde Straßenfahrzeug (3, 4, 63 - 69) zulässig ist:
a) ob die aktuelle Verkehrssituation im kontrollierten Straßenabschnitt (2) die Ausgabe des Einfahrtberechtigungstokens (6) erlaubt,
b) ob bei einem begrenzten Vorrat an Einfahrtberechtigungstoken (6) im Kontrollsystem (1) nach Ausgabe des angeforderten Einfahrtberechtigungstokens (6) noch eine Restmenge an Einfahrtberechtigungstoken (6) vorhanden ist, die einen vorgegebenen Mindestwert erreicht,
c) ob für die im kontrollierten Straßenabschnitt (2) gewünschte Fahrtrichtung des anfordernden Straßenfahrzeuges (3, 4, 63 - 69) überhaupt ein Einfahrtberechtigungstoken (6) ausgegeben werden kann,
d) ob die Anzahl der für den kontrollierten Straßenabschnitt (2) bereits ausgegebenen Einfahrtberechtigungstoken (6) einen vorgegebenen Maximalwert erreicht hat,
e) ob im Falle attributierter Einfahrtberechtigungstoken (6) die Anzahl der für den kontrollierten Straßenabschnitt (2) bereits ausgegebenen Einfahrtberechtigungstoken (6) eines bestimmten Attributs oder einer bestimmten Attributekombination einen vorgegebenen Grenzwert erreicht haben.

3. Verfahren nach einem der vorhergehenden Ansprüche, **dadurch gekennzeichnet, dass** die Einfahrtberechtigungstoken (6) eines oder mehrere Attribute aufweisen, wobei die Attribute bestimmte Berechtigungen des anfordernden Straßenfahrzeuges (3, 4, 63 - 69) zur Benutzung des kontrollierten Straßenabschnitts (2) kennzeichnen, wie z. B. zulässiges Gesamtgewicht, zulässige Fahrgeschwindigkeit, wenigstens eine Fahrzeugdimension, eine Fahrtrichtungsvorgabe beim Befahren des kontrollierten Straßenabschnitts (2), eine Prioritätsberechtigung beim Befahren des kontrollierten Straßenabschnitts (2).

4. Verfahren nach einem der vorhergehenden Ansprüche, **dadurch gekennzeichnet, dass** ein Einfahrtberechtigungstoken als Attribut einen Gültigkeitszeitraum und/oder einen Ablaufzeitpunkt des Einfahrtberechtigungstokens aufweist.

5. Verfahren nach einem der vorhergehenden Ansprüche, **dadurch gekennzeichnet, däss** eine Einfahrtberechtigungstoken-Anforderung eine oder mehrere Angaben über eine gewünschte Benutzungsart des kontrollierten Straßenabschnitts (2) durch das anfordernde Straßenfahrzeug (3, 4, 63 - 69) aufweist, und dass das Kontrollsystem (1) bei Empfang einer Einfahrtberechtigungstoken-Anforderung prüft, ob die Ausgabe eines Einfahrtberechtigungstokens (6) an das anfordernde Straßenfahrzeug (3, 4, 63 - 69) für die gewünschte Benutzungsart zulässig ist, und das Kontrollsystem (1) bei Zulässigkeit den angeforderten Einfahrtberechtigungstoken (6) an das anfordernde Straßenfahrzeug (3, 4, 63 - 69) übermittelt.

6. Verfahren nach Anspruch 5, **dadurch gekennzeichnet, dass** das Kontrollsystem (1) bei Zulässigkeit einen attributierten Einfahrtberechtigungstoken (6) an das anfordernde Straßenfahrzeug (3, 4, 63 - 69) übermittelt, der als Attribute die eine oder mehreren Angaben über die gewünschte Benutzungsart des kontrollierten Straßenabschnitts (2) durch das anfordernde Straßenfahrzeug (3, 4, 63 - 69) aufweist.

7. Verfahren nach einem der vorhergehenden Ansprüche, **dadurch gekennzeichnet, dass** von dem sich im kontrollierten Straßenabschnitt (2) befindenden Straßenfahrzeug (3, 4, 63 - 69) der Einfahrtberechtigungstoken (6) an das Kontrollsystem (1) zurückgegeben wird, wenn das Straßenfahrzeug (3, 4, 63 - 69) im kontrollierten Straßenabschnitt (2) außerhalb der von Straßenfahrzeugen (3, 4, 63 - 69) für die Durchfahrt zu benutzenden Fahrfläche abgestellt wird, und von einem Straßenfahrzeug (3, 4, 63 - 69), das in einem kontrollierten Straßenabschnitt (2) außerhalb der von Straßenfahrzeugen (3, 4, 63 - 69) zu befahrenden Fahrfläche abgestellt wurde, ein neuer Einfahrtberechtigungstoken (6) vom Kontrollsystem (1) angefordert wird, wenn das Straßenfahrzeug (3, 4, 63 - 69) die Durchfahrt durch den kontrollierten Straßenabschnitt (2) fortsetzen soll.

8. Verwendung eines Verfahrens nach einem der vorhergehenden Ansprüche zur Maut-Kontrolle, zur Verkehrsflussbegrenzung bei last- und/oder Fahrzeuggrößen-begrenzten Straßenabschnitten, zur Stauvermeidung, zur Geschwindigkeitskontrolle, zur Absicherung von Einbahnstraßen, zur Absicherung von Autobahnauffahrten, zur Absicherung von Bahnübergängen und/oder zur Ermöglichung von Prioritätsfahrrechten von Sondereinsatzfahrzeugen.

9. Kontrollsystem (1) zur Kontrolle eines kontrollierten Straßenabschnitts (2) und zur Ausgabe und Wiederannahme von Einfahrtberechtigungstoken (6) an anfordernde Straßenfahrzeuge oder von Straßenfahrzeugen (3, 4, 63 - 69), wobei das Kontrollsystem (1) zur Ausführung der Kontrollsystem-seitigen Schritte eines Verfahrens nach einem der Ansprüche 1 bis 7 eingerichtet ist.

10. Kontrollsystem (1) nach Anspruch 9, **dadurch gekennzeichnet, dass** das Kontrollsystem (1) insgesamt oder teilweise als stationäres, infrastrukturseitiges Kontrollsystem und/oder wenigstens ein Teil des Kontrollsystems (1) als Teil eines fahrzeugseitigen System (30, 40) eines Straßenfahrzeuges (3, 4, 63 - 69) ausgebildet ist.

11. Fahrzeugseitiges System (30, 40) zum Anfordern und Zurückgeben von Einfahrtberechtigungstoken (6) von einem oder an ein Kontrollsystem (1), wobei das fahrzeugseitige System (30, 40) zur Ausführung der fahrzeugseitigen Schritte eines Verfahrens nach einem der Ansprüche 1 bis 7 eingerichtet ist.

12. Computerprogramm mit Programmcodemitteln eingerichtet zur Durchführung Kontrollsystem-seitigen Schritte eines Verfahrens nach einem der Ansprüche 1 bis 7, wenn das Computerprogramm auf einem Prozessor eines Kontrollsystems (1) ausgeführt wird.

13. Computerprogramm mit Programmcodemitteln eingerichtet zur Durchführung fahrzeugseitigen Schritte eines Verfahrens nach einem der Ansprüche 1 bis 7, wenn das Computerprogramm auf einem Prozessor eines fahrzeugseitigen Systems (30, 40) ausgeführt wird.

## Claims

1. Method for automatically controlling the entry of a road vehicle (3, 4, 63-69) into a road section (2) controlled by a control system (1), having the following steps:
a) before entering the controlled road section (2), a vehicle system (30, 40) of the road vehicle (3, 4, 63-69) requests an entry authorization token (6) from the control system (1),
b) upon receiving an entry authorization token request, the control system (1) checks whether it is permissible to issue an entry authorization token (6) to the requesting road vehicle (3, 4, 63-69),
c) if permissible, the control system (1) transmits the requested entry authorization token (6) to the requesting road vehicle (3, 4, 63-69),
**characterized by** the following features:
d) the vehicle system (30, 40) generates, at the latest upon entering the controlled road section (2), an entry permission signal if the requested entry authorization token (6) has been received and an entry prohibition signal if the entry authorization token (6) has not been received,
e) the generated entry permission signal or entry prohibition signal is used further in the road vehicle (3, 4, 63-69) to generate a warning message and/or to carry out automatic control and/or regulation measures,
the requesting road vehicle (3, 4, 63-69) returning the entry authorization token (6) received from the control system (1) to the control system (1) after leaving the controlled road section (2).

2. Method according to the preceding claim, **characterized in that** the control system (1) uses one, a plurality of or all of the following criteria to check whether it is permissible to issue an entry authorization token (6) to the requesting road vehicle (3, 4, 63-69) :
a) whether the current traffic situation in the controlled road section (2) allows the entry authorization token (6) to be issued,
b) whether, in the case of a limited supply of entry authorization tokens (6) in the control system (1), there is still a remaining quantity of entry authorization tokens (6) which reaches a predefined minimum value after issuing the requested entry authorization token (6),
c) whether an entry authorization token (6) can actually be issued for the direction of travel of the requesting road vehicle (3, 4, 63-69) desired in the controlled road section (2),
d) whether the number of entry authorization tokens (6) already issued for the controlled road section (2) has reached a predefined maximum value,
e) whether, in the case of attributed entry authorization tokens (6), the number of entry authorization tokens (6) of a particular attribute or of a particular attribute combination which have already been issued for the controlled road section (2) has reached a predefined limit value.

3. Method according to one of the preceding claims, **characterized in that** the entry authorization tokens (6) have one or more attributes, the attributes indicating particular authorizations of the requesting road vehicle (3, 4, 63-69) to use the controlled road section (2), for example permissible total weight, permissible driving speed, at least one vehicle dimension, a specification of the direction of travel when travelling on the controlled road section (2), a priority authorization when travelling on the controlled road section (2) .

4. Method according to one of the preceding claims, **characterized in that** an entry authorization token has, as an attribute, a validity period and/or an expiry time of the entry authorization token.

5. Method according to one of the preceding claims, **characterized in that** an entry authorization token request has one or more details of a desired type of use of the controlled road section (2) by the requesting road vehicle (3, 4, 63-69), and **in that** the control system (1), upon receiving an entry authorization token request, checks whether it is permissible to issue an entry authorization token (6) to the requesting road vehicle (3, 4, 63-69) for the desired type of use, and, if permissible, the control system (1) transmits the requested entry authorization token (6) to the requesting road vehicle (3, 4, 63-69) .

6. Method according to Claim 5, **characterized in that,** if permissible, the control system (1) transmits an attributed entry authorization token (6) to the requesting road vehicle (3, 4, 63-69), which token has, as attributes, the one or more details of the desired type of use of the controlled road section (2) by the requesting road vehicle (3, 4, 63-69).

7. Method according to one of the preceding claims, **characterized in that** the road vehicle (3, 4, 63-69) in the controlled road section (2) returns the entry authorization token (6) to the control system (1) when the road vehicle (3, 4, 63-69) in the controlled road section (2) is parked outside the driving area to be used for passage by road vehicles (3, 4, 63-69), and a road vehicle (3, 4, 63-69) which has been parked in a controlled road section (2) outside the driving area to be travelled on by road vehicles (3, 4, 63-69) requests a new entry authorization token (6) from the control system (1) if the road vehicle (3, 4, 63-69) is intended to continue the passage through the controlled road section (2) .

8. Use of a method according to one of the preceding claims for toll control, for traffic flow restriction in the case of road sections with a load and/or vehicle size limit, for avoiding traffic jams, for speed control, for protecting one-way streets, for protecting motorway slip roads, for protecting level crossings and/or for enabling priority driving rights of special use vehicles.

9. Control system (1) for controlling a controlled road section (2) and for issuing and re-accepting entry authorization tokens (6) to requesting road vehicles or from road vehicles (3, 4, 63-69), the control system (1) being set up to carry out the control-system steps of a method according to one of Claims 1 to 7.

10. Control system (1) according to Claim 9, **characterized in that** the control system (1) is fully or partially in the form of a stationary infrastructure control system and/or at least one part of the control system (1) is in the form of part of a vehicle system (30, 40) of a road vehicle (3, 4, 63-69) .

11. Vehicle system (30, 40) for requesting and returning entry authorization tokens (6) from or to a control system (1), the vehicle system (30, 40) being set up to carry out the vehicle steps of a method according to one of Claims 1 to 7.

12. Computer program having program code means set up to carry out control-system steps of a method according to one of Claims 1 to 7 when the computer program is executed on a processor of a control system (1) .

13. Computer program having program code means set up to carry out vehicle steps of a method according to one of Claims 1 to 7 when the computer program is executed on a processor of a vehicle system (30, 40) .

## Revendications

1. Procédé de contrôle automatique de l'entrée d'un véhicule routier (3, 4, 63 - 69) dans une portion de route (2) contrôlée par un système de contrôle (1), comprenant les étapes suivantes :
a) avant l'entrée dans la portion de route (2) contrôlée, un système côté véhicule (30, 40) du véhicule routier (3, 4, 63 - 69) demande un jeton d'autorisation d'entrée (6) de la part du système de contrôle (1),
b) lors de la réception d'une demande de jeton d'autorisation d'entrée, le système de contrôle (1) vérifie si la délivrance d'un jeton d'autorisation d'entrée (6) au véhicule routier (3, 4, 63 - 69) demandeur est admissible,
c) en cas d'admissibilité, le système de contrôle (1) communique le jeton d'autorisation d'entrée (6) demandé au véhicule routier (3, 4, 63 - 69) demandeur,
**caractérisé par** les caractéristiques suivantes :
d) au plus tard lors de l'entrée dans la portion de route (2) contrôlée, le système côté véhicule (30, 40) génère un signal de permission d'entrée si le jeton d'autorisation d'entrée (6) demandé a été reçu et un signal d'interdiction d'entrée si le jeton d'autorisation d'entrée (6) n'a pas été reçu,
e) le signal de permission d'entrée ou le signal d'interdiction d'entrée généré est réutilisé dans le véhicule routier (3, 4, 63 - 69) pour générer un message d'alerte et/ou pour accomplir des mesures de commande et/ou de régulation automatiques,
le véhicule routier (3, 4, 63 - 69) demandeur restituant le jeton d'autorisation d'entrée (6) obtenu de la part du système de contrôle (1) au système de contrôle (1) après avoir quitté la portion de route (2) contrôlée.

2. Procédé selon la revendication précédente, **caractérisé en ce que** le système de contrôle (1) vérifie, au moyen d'un, de plusieurs ou de la totalité des critères suivants, si la délivrance d'un jeton d'autorisation d'entrée (6) au véhicule routier (3, 4, 63 - 69) demandeur est admissible :
a) si la situation de trafic actuelle dans la portion de route (2) contrôlée permet la délivrance du jeton d'autorisation d'entrée (6),
b) si dans le cas d'une réserve limitée de jetons d'autorisation d'entrée (6) dans le système de contrôle (1), il existe encore, après la délivrance du jeton d'autorisation d'entrée (6) demandé, une quantité restante de jetons d'autorisation d'entrée (6) qui atteint une valeur minimale prédéfinie,
c) si un jeton d'autorisation d'entrée (6) peut réellement être délivré pour le sens de circulation souhaité du véhicule routier (3, 4, 63 - 69) demandeur dans la portion de route (2) contrôlée,
d) si le nombre de jetons d'autorisation d'entrée (6) déjà délivrés pour la portion de route (2) contrôlée a atteint une valeur maximale,
e) si dans le cas de jetons d'autorisation d'entrée (6) avec attributs, le nombre des jetons d'autorisation d'entrée (6) ayant un attribut donné ou une combinaison d'attributs donnée déjà délivrés pour la portion de route (2) contrôlée a atteint une valeur limite prédéfinie.

3. Procédé selon l'une des revendications précédentes, **caractérisé en ce que** les jetons d'autorisation d'entrée (6) possèdent un ou plusieurs attributs, les attributs identifiant certaines autorisations du véhicule routier (3, 4, 63 - 69) demandeur à utiliser la portion de route (2) contrôlée, comme par exemple le poids total admissible, la vitesse de déplacement admissible, au moins une dimension du véhicule, une consigne de sens de circulation lors de la circulation sur la portion de route (2) contrôlée, une autorisation prioritaire lors de la circulation sur la portion de route (2) contrôlée.

4. Procédé selon l'une des revendications précédentes, **caractérisé en ce qu'**un jeton d'autorisation d'entrée possède comme attribut une période de validité et/ou un instant d'expiration du jeton d'autorisation d'entrée.

5. Procédé selon l'une des revendications précédentes, **caractérisé en ce qu'**une demande de jeton d'autorisation d'entrée possède une ou plusieurs indications à propos d'un mode d'utilisation souhaité de la portion de route (2) contrôlée par le véhicule routier (3, 4, 63 - 69) demandeur, et **en ce que** le système de contrôle (1), lors de la réception d'une demande de jeton d'autorisation d'entrée, vérifie si la délivrance d'un jeton d'autorisation d'entrée (6) au véhicule routier (3, 4, 63 - 69) demandeur est admissible pour le mode d'utilisation souhaité et, en cas d'admissibilité, le système de contrôle (1) communique le jeton d'autorisation d'entrée (6) demandé au véhicule routier (3, 4, 63 - 69) demandeur.

6. Procédé selon la revendication 5, **caractérisé en ce qu'**en cas d'admissibilité, le système de contrôle (1) communique au véhicule routier (3, 4, 63 - 69) demandeur un jeton d'autorisation d'entrée (6) avec attributs qui possède comme attributs la ou les plusieurs indications à propos du mode d'utilisation souhaité de la portion de route (2) contrôlée par le véhicule routier (3, 4, 63 - 69) demandeur .

7. Procédé selon l'une des revendications précédentes, **caractérisé en ce que** le jeton d'autorisation d'entrée (6) est restitué au système de contrôle (1) par le véhicule routier (3, 4, 63 - 69) qui se trouve dans la portion de route (2) contrôlée lorsque le véhicule routier (3, 4, 63 - 69) dans la portion de route (2) contrôlée est mis à l'arrêt en-dehors de la surface de circulation à utiliser par les véhicules routiers (3, 4, 63 - 69) pour la traversée, et un nouveau jeton d'autorisation d'entrée (6) est demandé de la part du système de contrôle (1) par un véhicule routier (3, 4, 63 - 69) qui avait été mis à l'arrêt dans une portion de route (2) contrôlée en-dehors de la surface de circulation à utiliser par les véhicules routiers (3, 4, 63 - 69) lorsque le véhicule routier (3, 4, 63 - 69) doit poursuivre la traversée de la portion de route (2) contrôlée.

8. Utilisation d'un procédé selon l'une des revendications précédentes pour le contrôle du péage, pour la limitation de la circulation dans le cas de portions de route à limitation de charge et/ou de taille de véhicule, pour la prévention des embouteillages, pour le contrôle de la vitesse, pour la sécurisation de routes à voie unique, pour la sécurisation des bretelles d'accès d'autoroute, pour la sécurisation de passages à niveau et/ou pour rendre possible l'attribution de droits de circulation prioritaire à des véhicules d'intervention spéciaux.

9. Système de contrôle (1) destiné à contrôler une portion de route (2) contrôlée et à délivrer des jetons d'autorisation d'entrée (6) à des véhicules routiers demandeurs ou les accepter en retour de la part de véhicules routiers (3, 4, 63 - 69), le système de contrôle (1) étant conçu pour exécuter les étapes concernant le système de contrôle d'un procédé selon l'une des revendications 1 à 7.

10. Système de contrôle (1) selon la revendication 9, **caractérisé en ce que** le système de contrôle (1) est réalisé entièrement ou partiellement sous la forme d'un système de contrôle stationnaire côté infrastructure et/ou au moins une partie du système de contrôle (1) sous la forme d'une partie d'un système côté véhicule (30, 40) d'un véhicule routier (3, 4, 63 - 69).

11. Système côté véhicule (30, 40) pour demander et restituer des jetons d'autorisation d'entrée (6) de la part ou à un système de contrôle (1), le système côté véhicule (30, 40) étant conçu pour exécuter les étapes concernant le véhicule d'un procédé selon l'une des revendications 1 à 7.

12. Programme informatique comprenant des moyens de code de programme conçus pour exécuter les étapes concernant le système de contrôle d'un procédé selon l'une des revendications 1 à 7 lorsque le programme informatique est exécuté sur un processeur d'un système de contrôle (1).

13. Programme informatique comprenant des moyens de code de programme conçus pour exécuter des étapes concernant le véhicule d'un procédé selon l'une des revendications 1 à 7 lorsque le programme informatique est exécuté sur un processeur d'un système côté véhicule (30, 40) .
